# EUROPEAN PATENT SPECIFICATION

(11) **EP 2 527 610 B1**
(45) Date of publication and mention of the grant of the patent: **18.03.2015**
(21) Application number: 11167833.0
(22) Date of filing: 27.05.2011
(51) Int. Cl.: F01N 3/20, F02B 37/013, F01N 3/28

(54) **SCR catalyst section and turbocharged engine therewith**
SCR-Katalysator Sektion und ein Turbomotor damit
Section de catalyseur SCR et moteur turbocompressé avec celle-ci

(43) Date of publication of application: 28.11.2012
(73) Proprietor: Caterpillar Motoren GmbH & Co. KG, 24159 Kiel (DE)
(72) Inventor: Schlemmer-Kelling, Udo Dr., 24113 Molfsee (DE)
(74) Representative: Kramer Barske Schmidtchen Patentanwälte PartG mbB

(56) References cited:
- DE-A1- 19 701 169
- DE-A1-102004 027 593
- US-A- 5 330 728

## Description

### Technical Field

The present disclosure generally refers to a turbocharged engine system and more particularly to a configuration of an SCR catalyst system of a two-stage turbocharged engine system.

### Background

Internal combustion engines exhaust a complex mixture of air pollutants. These air pollutants are composed of gaseous compounds such as nitrogen oxides (NOₓ), and solid particulate matter also known as soot. Due to increased environmental awareness, exhaust emission standards have become more stringent, and the amount of NOₓ and soot emitted to the atmosphere by an engine may be regulated depending on the type of engine, size of engine, and/or class of engine.

In order to ensure compliance with the regulation of NOₓ, a strategy called selective catalytic reduction (SCR) for treating the exhaust gas can be implemented. SCR is a process where a gaseous or liquid reductant, e.g. ammonia, urea or an urea solution, is injected into the exhaust gas stream of an engine. The reductant reacts with nitrogen oxides in the exhaust gas to form water and nitrogen. Usually, urea is introduced into the exhaust gases in an amount sufficient to provide the degree of NOₓ-reduction desired. The desired amount of the reductant can be controlled by, e.g., an urea injection system.

Generally, SCR can be effective, e.g., within a temperature range from about 200°C to about 500°C. Through providing a catalytic surface in form of the SCR catalyst, the SCR process can be promoted and more efficiently performed, in particular, at lower temperatures. Thus, it is important to provide a suitable temperature and a suitable catalytic material with a sufficiently large surface for the SCR reaction.

SCR as used herein generally includes those processes that utilize ammonia or any NOₓ-reducing reagent capable of generating ammonia gas upon heating. The term "urea" as used herein is further meant to comprise all those reductants that are commercially available for performing SCR.

An SCR emission control system is disclosed, for example, in WO 2009/017598 Al and a temperature-adjusted SCR system is disclosed, for example, in WO 2008/054631 A1. Moreover, DE 10 2008 017 280 Al discloses an arrangement of at least one catalyst and/or particulate filter within a two-stage turbocharged system.

As an alternative for SCR, exhaust gas recycling (EGR) is used to reduce NOₓ emission. The not yet published EP application 09002111 (filed by Caterpillar Motoren GmbH & Co. KG on 16 February 2009) discloses a turbocharged engine with exhaust gas recycling. In particular, the EP application discloses an engine having end sides being opposite in a lengthwise direction of a crankshaft. On each side, a single-stage turbocharger system, i.e. an exhaust turbocharger with a turbine and a compressor, is arranged. The turbines are fluidly connected to a common exhaust manifold of the engine, while the compressors are fluidly connected to a common intake manifold of the engine.

For medium speed internal combustion engines, two-stage turbocharged systems having a low-pressure stage turbocharger and high-pressure stage turbocharger can be used to pre-compress the charge air being provided to the combustion chambers. The turbocharged systems can be mounted to an engine block and, accordingly, can be exposed to vibrations caused by the operating engine. Usually, the low-pressure stage turbocharger of a two-stage turbocharged system may be exposed to an increased oscillation amplitude if it is mounted at a relatively large distance via the high-pressure stage turbocharger to the engine.

Furthermore, oxidation catalysts are known for exhaust gas treatment, e.g., of diesel and natural gas engines.

In addition, in order to provide a sufficiently large surface for the catalytic reaction, the size of the, e.g., SCR catalyst can increase with the amount of exhaust gas generated, e.g., for medium speed internal combustion engines.

DE 197 01 169 A1 discloses a catalytic converter having a housing with an inlet and an outlet. A first catalytic substrate extends from the inlet and defines a first longitudinal axis, and a second catalytic substrate extends from the first catalytic substrate to the outlet and defines a second longitudinal axis. The second longitudinal axis intersects the first longitudinal axis at an angle.

US 5,330,728 discloses a catalytic converter for use in the exhaust system of an internal combustion engine having a catalyst coated substrate with an inlet face oriented at an angle less than ninety degrees to the flow of exhaust gas entering the converter. Fluid flow channels extending through the substrate from the inlet face to an outlet face are oriented at an angle less than ninety degrees to the inlet face.

DE 10 2004 027 593 A1 discloses a combustion engine system including a SCR catalyst.

The present disclosure is directed, at least in part, to improving or overcoming one or more aspects of prior systems.

### Summary of the disclosure

According to a first aspect of the present disclosure, an SCR catalyst section for fluidly connecting a first turbine and a second turbine of a two-stage turbocharged system of a turbocharged internal combustion engine comprises a housing extending in a longitudinal direction with an L-shaped cross-section. An inlet is formed in a first end of the housing in the longitudinal direction, and an outlet is formed in a second end of the housing in the longitudinal direction. A first chamber is at least partially defined by the housing and fluidly connected to the inlet, the first chamber being formed in one of the end portions of the L-shape. A second chamber is at least partially defined by the housing and fluidly connected to the outlet, the second chamber being formed in the other one of the end portions of the L-shape. A flow passage fluidly connects the first chamber and the second chamber. A SCR catalyst is supported by a catalyst support in the flow passage. The SCR catalyst comprises a first end face, a second end face and a plurality of channels, each of the plurality of channels extending from the first end face to the second end face and opening to the first end face and the second end face. Each of the plurality of channels extends from the first end face along a first longitudinal axis at a first angle of around 40° to 70°.

According to a second aspect of the present disclosure, a turbocharged internal combustion engine comprises an engine block with a first end side opposing a second end side. The turbocharged internal combustion engine further comprises a two-stage turbocharged system comprising a low-pressure stage turbocharger mounted at the first end side of the engine block and comprising a first turbine in a first compressor configured for pre-compressing charge air during operation of the turbocharged internal combustion engine, and a high-pressure stage turbocharger mounted at the second end side of the engine block and comprising a second turbine and a second compressor configured for compressing the pre-compressed charge air during operation of the turbocharged internal combustion engine. A compressor connection fluidly connects the first compressor and the second compressor, and a turbine connection fluidly connects the first turbine and the second turbine. The turbine connection includes an SCR catalyst section according to the first aspect of the present disclosure.

Other features and aspects of this disclosure will be apparent from the following description and the accompanying drawings.

### Brief Description of the Drawings

Fig. 1 is a schematic top view of an internal combustion engine with a two-stage turbocharged system with a first catalyst configuration;
Fig. 2 is a schematic perspective view of an internal combustion engine with a two-stage turbocharged system;
Fig. 3 is a schematic view of a turbine connection of a two-stage turbocharged system with an SCR system;
Fig. 4 is a schematic top view of an internal combustion engine with a two-stage turbocharged system with a second catalyst configuration;
Fig. 5 is a schematic top view of an internal combustion engine with a two-stage turbocharged system with a third catalyst configuration;
Fig. 6 is a schematic side sectional view of an exemplary SCR catalyst section with a first configuration;
Fig. 7 is a schematic side sectional view of an exemplary SCR catalyst section with a second configuration;
Fig. 8 is a cross-sectional view of the SCR catalyst section of Fig. 7 taken along the line 8-8;
Fig. 9A is a plan view of an inlet-side end of the SCR catalyst section of Fig. 7;
Fig. 9B is a plan view of an outlet-side end of the SCR catalyst section of Fig. 7;
Fig. 10A is a plan view of an inlet-side end of a modification of the configuration shown in Fig. 9A;
Fig. 10B is a plan view of an outlet-side end of a modification of the configuration shown in Fig. 10B;
Fig. 11 is a schematic perspective view of an exemplary SCR catalyst section with a third configuration;
Fig. 12 is a schematic perspective view of a catalyst unit disposed in the SCR catalyst section of Fig. 11;
Fig. 13 is a schematic perspective view illustrating an exemplary method of obtaining the catalyst unit of Fig. 12.
Fig. 14 is a schematic top sectional view of the SCR catalyst section of Fig. 11; and
Fig. 15 is a schematic side sectional view of the SCR catalyst section of Fig. 11.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure may be based in part on the discovery that mounting each of the turbocharger stages of a two-stage turbocharged system close to the vibration source may reduce the amplitude of the vibration and, thereby, may reduce the mechanical stress onto the turbocharged stages usually caused by the vibrations of the engine during operation.

In addition, the disclosure may be based in part on the discovery that, when mounting the stages of a two-stage turbocharged system on opposing end sides of an engine, the connections between the compressors and the turbines of the two-stage turbocharged system extend along essentially the complete length side of the engine and, thus, provide therein additional space for implementing an SCR system.

Furthermore, the disclosure may be based in part on the realization that an arrangement of an SCR catalyst section including an SCR catalyst with a plurality of channels, each of the plurality of channels providing a catalytic surface and extending from an end face of the SCR catalyst at an angle, may allow installing an SCR catalyst having a desired catalytic surface and flow area in a connection between the turbines of the two-staged turbo-charged system that may have a diameter that fits in the design frame of the two-staged turbo-charged system.

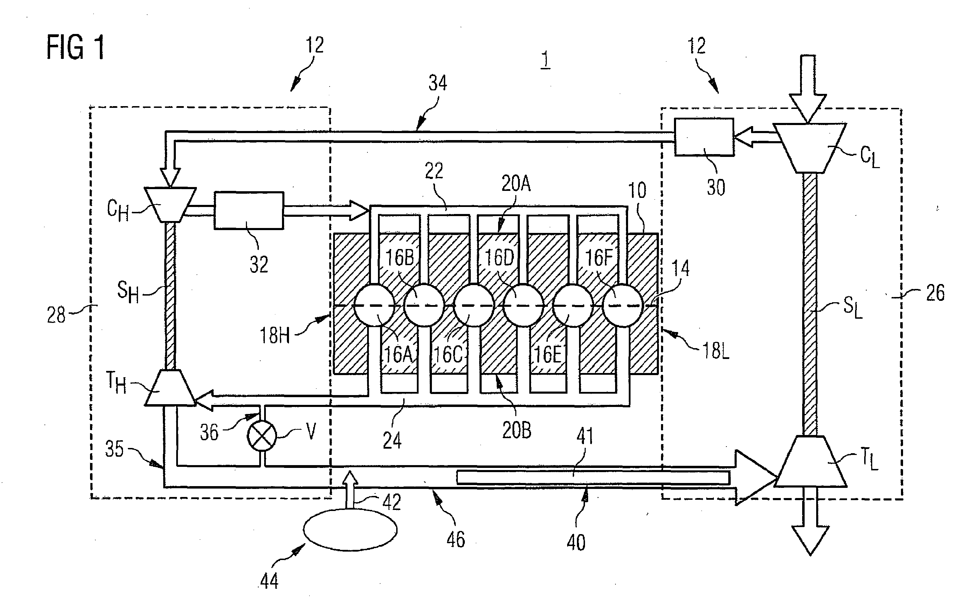

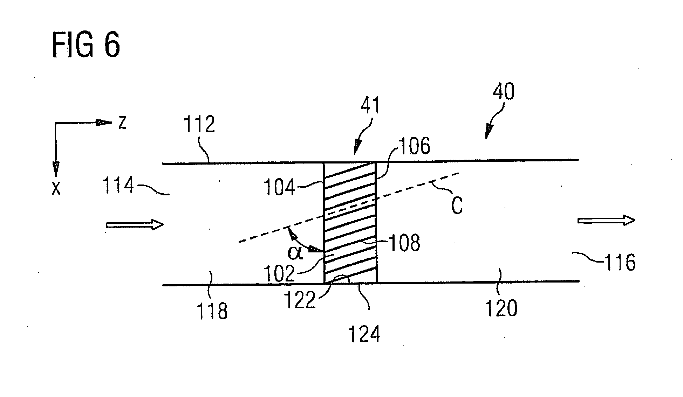

Exemplary embodiments of a two-stage turbocharged internal combustion engine with an SCR system are described in the following with reference to Figs. 1 to 15, wherein the examples shown in Figs. 6 to 10 are presented not as embodiments of the invention but as examples which are useful for understanding the invention.

An internal combustion engine 1, e.g. an in-line 6-cylinder engine, may comprise an engine block 10, a two-stage turbocharged system 12, a fuel tank, one or more catalysts, and an engine control unit (not shown). Engine block 10 may include a crankcase within which a crankshaft 14 may be supported. Crankshaft 14 is indicated by a dashed line in Fig. 1. Crankshaft 14 may be connected to pistons (not shown), which may be movable within respective cylinders 16A to 16F during operation of the engine.

Engine block 10 as illustrated may have end sides 18L and 18H, being opposite in a lengthwise direction defined by crankshaft 14. Engine block 10 may further have long sides 20A and 20B being opposite in a direction orthogonal to the lengthwise direction of crankshaft 14.

An intake manifold 22 may extend along the long side 20A of engine block 10 and may be fluidly connected to each of cylinders 16A to 16F. Each of cylinders 16A to 16F may be provided with at least one inlet valve (not shown), which may be adapted to open or close the fluid connection between intake manifold 22 and a working chamber of the respective cylinder.

At long side 20B, an exhaust manifold 24 may be provided, which may be connected to each of cylinders 16A to 16F. Each of cylinders 16A to 16F may be provided with at least one exhaust valve (not shown) configured to open and close the fluid connection between the working chambers of respective cylinders 16A to 16F and exhaust manifold 24.

Generally, when engine 1 is operated, charge air may be introduced into cylinders 16A to 16F through intake manifold 22. After combustion, exhaust gases generated by the combustion process may be released from cylinders 16A to 16F through exhaust manifold 24.

Two-stage turbocharged system 12 may comprise a low-pressure stage turbocharger 26 and a high-pressure stage turbocharger 28, the turbochargers 26 and 28 forming a sequential turbocharger system.

Generally, turbochargers may be applied to use the heat and pressure of the exhaust gas of an engine to drive a compressor for compressing the charge air for the engine. Specifically, exhaust gas passing a turbine of a turbocharger, may rotate the turbine, thereby decreasing in pressure and temperature. A compressor of the turbocharger is rotatably connected via a common shaft-with the turbine and may be driven by the turbine.

At end side 18L (also referred to as low-pressure side), low-pressure stage turbocharger 26 may be fixedly attached to engine block 10, e.g. directly or as a unit in combination with other components such as coolant blocks etc. Low-pressure stage turbocharger 26 may comprise a compressor C_{L} and a turbine T_{L} that are mechanically connected via a common shaft S_{L}.

At side 18H (also referred to as high-pressure side), high-pressure stage turbocharger 28 may be fixedly attached to engine block 10, e.g. directly or as a unit in combination with other components such as coolant blocks etc. High-pressure stage turbocharger 28 may comprise a compressor C_{H} and a turbine TH that are connected via a common shaft S_{H}.

An inlet of compressor C_{L} may be configured to suck in charge air for the combustion process. Generally, an outlet of compressor C_{L} may be fluidly connected via compressor connection 34 with an inlet of compressor C_{H}. For example, the outlet of compressor C_{L} may be connected via a first cooler 30 to an inlet of compressor C_{H}. Then, an outlet of compressor C_{H} may be connected via a second cooler 32 with intake manifold 22 being configured to distribute the charge air to cylinders 16A to 16F.

Low-pressure stage turbocharger 26 and first cooler 30 may form a first unit that as such may be mounted to end side 18L of engine block 10. High-pressure stage turbocharger 28 and second cooler 32 may form a second unit that as such may be mounted to end side 18H of engine block 10.

Usually, access to engine components, e.g. cylinders 16A to 16F and manifolds 22, 24, may be provided from long sides 20A, 20B while side faces of engine block 10 at end sides 18L and 18H may be configured and shaped for mounting large components of two-stage turbocharged system 12, e.g. turbochargers 26, 28 or cooler/turbocharger units.

Thus, the charge air provided for the combustion process may be compressed prior to introduction into the engine cylinders using two-stage turbocharged system 12.

During operation of engine 1, the charge air is accordingly twice compressed and cooled before charging of the cylinders 16A to 16F. Within cylinders 16A to 16F, further compression and, thereby, heating of the charge air may be caused through the movement of the pistons. Then, an appropriate amount of fuel, e.g. diesel oil, marine diesel oil, heavy fuel oil or a mixture thereof, may be injected into cylinders 16A to 16F. Therein, the fuel may be combusted with the compressed charged air and produce exhaust gases, which may be discharged via exhaust manifold 24.

For medium speed large internal combustion engines, compressor C_{L} may compress the charge air to 4-5 bar at 180°C. Cooler 30 may cool the charge air from about 180°C to 45°C. Compressor C_{H} may compress the charge air to 7-8 bar at 180°C and cooler 32 may cool the charge air from about 180°C to 45°C. After combustion, the exhaust gas may have a pressure of about 5 to 6 bar at a temperature in the range of about 450°C to 500°C. Within turbine connection 35, the pressure drops to 3-4 bar and a temperature in the range of about 350°C to 400°C. After turbine T_{L} the temperature at ambient pressure may be in the range of or below 250°C.

An outlet of exhaust manifold 24 is connected to an inlet of turbine T_{H}. An outlet of turbine T_{H} is fluidly connected with an inlet of turbine T_{L} via a turbine connection 35 and an outlet of turbine T_{L} may release the exhaust gas to, for example, a secondary exhaust filtering system or directly into the environment.

The above described cycle may be repeated continuously as the engine continues to run, thereby generating vibrations through the combustion itself and the movement of the pistons and crankshaft.

During operation of engine 1, compressors C_{L} and C_{H} may be driven by turbines T_{L} and T_{H} in a controlled manner as the amount of exhaust gas provided to turbine T_{H} may be controlled, for example, via a valve V provided in a valve connection 36 fluidly connecting exhaust manifold 24 and turbine connection 35.

Turbine connection 35 extends along long side 20B. Thus, in the case of a medium speed large internal combustion engine turbine connection 35 may have a length of several meters, e.g. 5 m. Turbine connection 35 may be, e.g., a tubular conduit having an inner diameter of several tenth of meters. Generally, turbine connections may have an inner diameter of about 0.5 to 1 times the inner diameter of a piston of the turbocharged internal combustion engine. For internal combustion engines having piston diameters of e.g. 0.2 to 0.6 m, an inner diameter of turbine connections may be in the range of about 0.1 m to 0.6 m, e.g. about 0.3, 0.4 m, or 0.5 m or larger. For medium speed internal combustion engines, inner diameters of turbine connections may be in the range of about 0.3 m to 0.5 m.

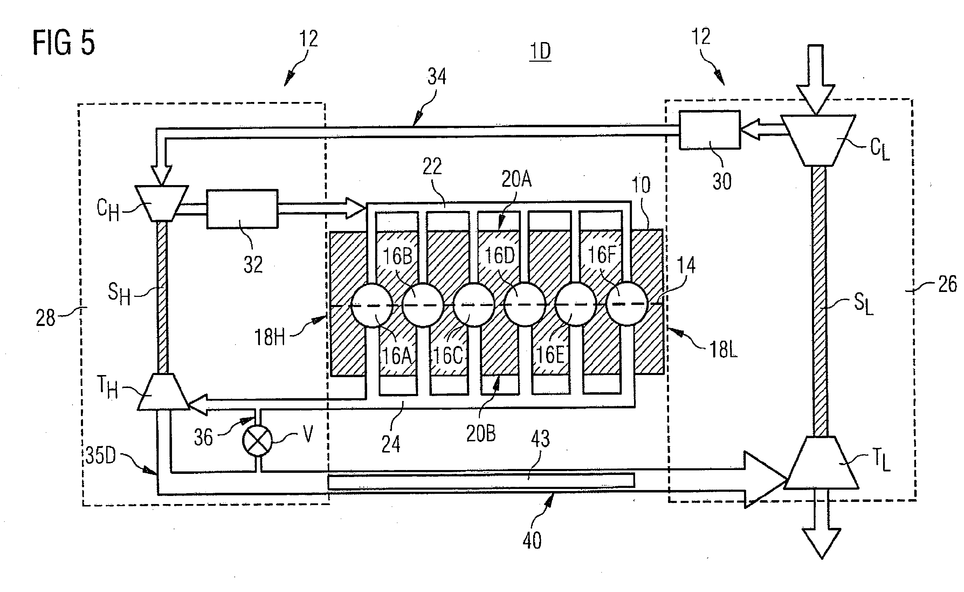

Turbine connection 35 may include a catalyst section 40 comprising a catalyst 41, e.g. a selective catalytic reduction catalyst or an oxidation catalyst (see also the embodiment of Fig. 5). Upstream of catalyst section 40, an injection inlet 42 for injecting a chemical reagent (e.g. urea as a reductant for SCR) into turbine connection 35 may be provided. Injection inlet 42 may be part of an (e.g. urea) injection system 44. Between injection inlet 42 and catalyst section 40, turbine connection 35 may include a reagent homogenization section 46. Reagent homogenization section 46 may have a length sufficiently long to provide a homogeneous distribution of the reagent in the exhaust gas before reaching catalyst 41. The length of homogenization section can be, e.g., about four times the inner diameter of the homogenization section or more; e.g. five times the inner diameter of the homogenization section of 0.3 m, e.g., 1.2 m or more. In some embodiments, the length of homogenization section can be, e.g., about two times the inner diameter of the homogenization section or more. In some configurations, additional homogenization may be achieved by structural design or additional components (e.g. turbine) such that a shorter length of homogenization section can be applied.

By providing the (e.g. SCR) catalyst between the stages of the two-stage turbocharged system, components of the exhaust gas, e.g. NOₓ, may perform the catalytic reaction (e.g. SCR) at pressures in a range from 2-5 bar, e.g., for medium speed engines at a pressure of about 3-4 bar and in a temperature range from about 300° C to 450°C, e.g. for medium speed engines at a temperature of about 350°C to 400°C. As the required catalytic surface may be proportional to the volume of the catalyst, the dimensions of the catalyst may be smaller at increased pressure than for a catalyst provided at ambient pressure, e.g. after turbine T_{L} (i.e. at about 1 bar and 250°C).

Moreover, by mounting the turbochargers at opposite sides of the engine block, mounting may be simplified and space may be used effectively.

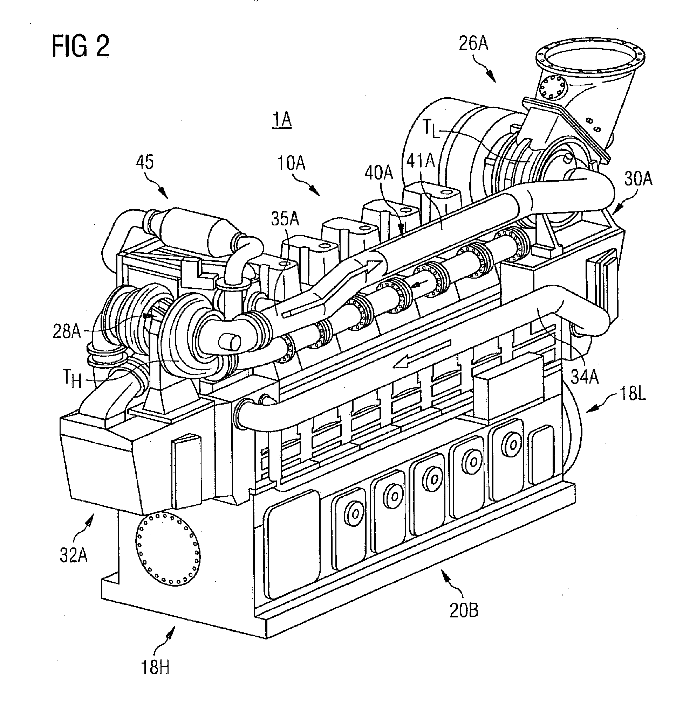

In Fig. 2, an engine 1A is illustrated that comprises a low-pressure turbocharger 26A and a high-pressure turbocharger 28A that each form structural units together with coolers 30A and 32A, respectively. The units may be fixedly connected to an engine block 10A at end sides 18L and 18H.

Along long side 20B, an exhaust manifold 24A may be fluidly connected to each of the cylinders (shown between turbochargers 26A and 28A) and an inlet manifold (not shown in Fig. 2) may similarly be fluidly connected to the cylinders.

A compressor connection section 34A may extend between end sides 18L and 18H of engine block 10A along long side 20B of engine block 10A. Specifically, compressor connection section 34A may extend from the outlet of the first cooler 30A to the inlet of the compressor of high-pressure turbocharger 28A. Compressor connection section 34A may be a tubular conduit used, for example, to add an additive (e.g. water) to the pre-compressed charge air.

A turbine connection 35A may extend between end sides 18L and 18H of engine block 10A along long side 20B of engine block 10A. Specifically, turbine connection 35A may extend from the outlet of turbine T_{H} of high-pressure turbochargers 28A to the inlet of turbine T_{L} of low-pressure turbocharger 26A. Turbine connection 35A may comprise a linear tubular segment that may be used as a catalyst section 40A with an e.g. SCR, catalyst 41A schematically indicated in Fig. 2.

The reagent injection (not explicitly shown in Fig. 2) may be positioned upstream (the arrows in Fig. 2 indicate the direction of the gas stream during operation) of catalyst section 40A of turbine connection 35A.

In Fig. 2, catalyst 41A may be an SCR catalyst or an oxidation catalyst. In some embodiments an SCR catalyst and an oxidation catalyst may be provided.

In Fig. 2, an EGR system 45 is shown. EGR may be used to reduce the NOₓ generated during the combustion and may in some cases be used together or alternatively to SCR during operation. For example, during the start up of an engine, EGR may be used and, for a warmed up engine, SCR may be used.

In some embodiments, EGR system 45 shown in Fig. 2 may not be provided.

In some embodiments, the intake manifold and exhaust manifold 24B may be integrally cast with, e.g., the crank case of engine block 10A.

In some embodiments, the above disclosed two-stage turbocharged systems may be applied to a V-engine including, for example, two cylinder banks, each corresponding to the single cylinder banks of Figs. 1 or 2, one of which being mirrored with respect to a vertical central plane of the engine block including its crankshaft. In those embodiments, an intake manifold may be located, for example, between the cylinder banks and each of the cylinder banks may be provided with a separate exhaust manifold.

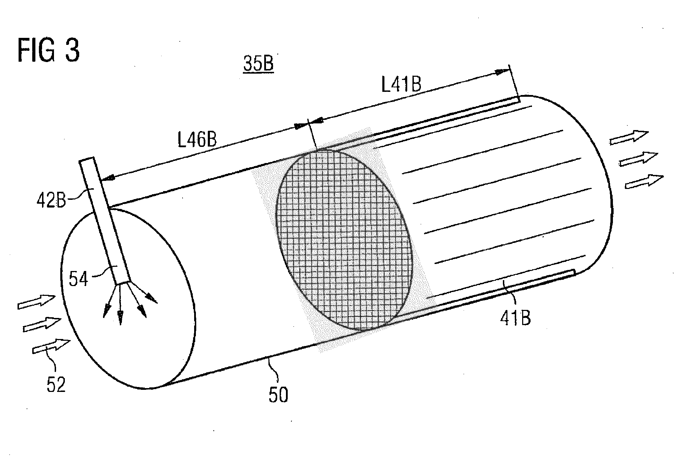

Referring to Fig. 3, details of an SCR system are shown that may be integrated within a turbine connection 35B. At an injection inlet 42B, an injector 54 for urea may be mounted that may inject urea, e.g. an urea solution, into the exhaust gas that passes in the direction indicated by arrows 52. Within a homogenization region having a length L46B, the urea may be distributed in the exhaust gas before the urea-exhaust gas mixture enters into an SCR catalyst 41B. SCR catalyst 41B may have a length L41B and provide a large surface of a catalytic reagent applied to a carrier (e.g. a carrier channel structure) for the SCR reaction.

For example, SCR catalyst 41B may be completely positioned within a conduit 50 of turbine connection 35B, thereby efficiently using the space for SCR.

For example, in a tubular conduit, a cylinder-shaped SCR catalyst may have an outer diameter that corresponds essentially to the inner diameter of the tubular conduit. Specifically, the outer diameter of a turbine connection for a medium speed engine may be in the range of about 0.5 m to 0.6 m and the inner diameter about 0.5 m. Accordingly, the outer diameter of the SCR catalyst may be about 0.5 m.

In some embodiments, for example, two thirds of the length of the turbine connection may be filled-in with the SCR catalyst. Thus, for a turbine connection having a length of 6 m, urea may be injected at a distance of about 1 m from the high-pressure stage turbocharger and may afterward be homogenously distributed within the exhaust gas within a homogenizing section of a length of about 1 m (L46B) such that the SCR process may then be performed with an SCR catalyst having a length of about 4 m (L41B).

Due to the significant length of turbine connection in the case of, e.g., medium speed internal combustion engines, and its mounting to the engine via the separated stages of the two-stage turbocharged system, the components of the SCR system and, in particular, the SCR catalyst may be exposed to vibrations of the engine. Therefore, catalyst reagents may be, for example, applied to a metal or ceramic base structure.

The disclosed configurations may provide the advantage that space may be effectively used for providing an SCR catalyst in between stages of a two-stage turbocharged system. Moreover, the disclosed configuration may have the advantage that the turbocharging stages may be fixedly connected to the engine block and, because each of the turbocharging stages is directly connected to the engine block, the vibration amplitudes of the components of the turbocharging stages may be reduced in comparison to a two-stage turbocharged system having both turbocharging stages positioned at the same side of the engine block.

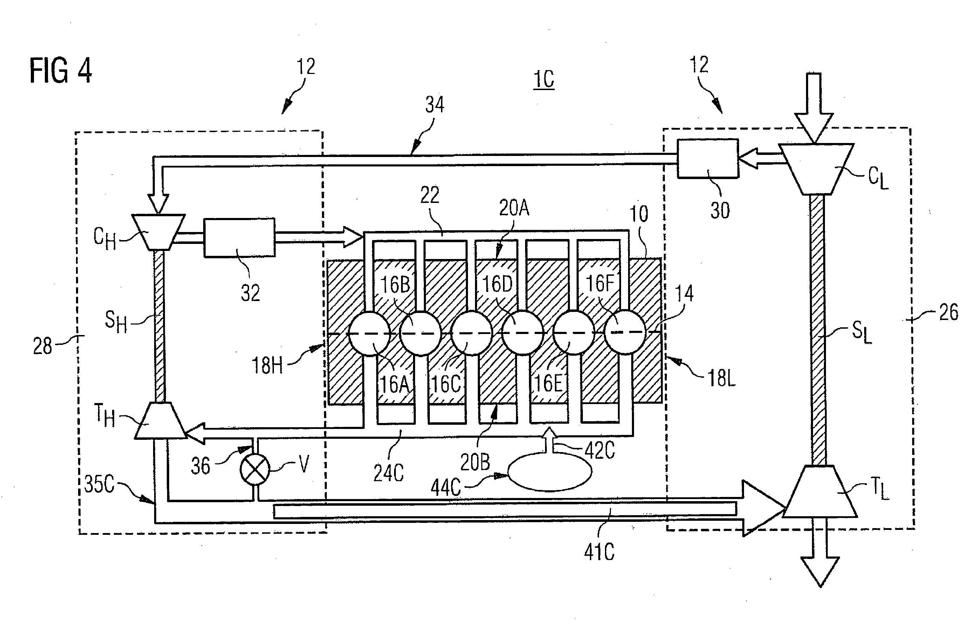

In some embodiments, the complete length of the turbine connection may be used for the catalyst. In Fig. 4, an internal combustion engine 1C is shown that corresponds essentially to internal combustion engine 1 of Fig. 1 with the exception of the configuration of the SCR catalytic system. Accordingly, for the common aspects, it is referred to the description of Fig. 1.

In contrast to Fig. 1, a catalyst 41C may extend within, e.g. more than 80% of the length of turbine connection 35C. For SCR, an injection system 44C may then be configured such that an injection inlet 42C injects a reagent into an exhaust manifold 24C, e.g. between the connecting pipes to cylinders 16D and 16E (shown in Fig. 4) or at any other position. Accordingly, the injected reagent is homogeneously distributed when passing along an exhaust manifold 24C and being mixed with the exhaust of the remaining cylinders. In addition, the reagent may be further homogeneously distributed within the exhaust gas when passing turbine T_{H}.

As mentioned above, in addition or alternatively, also an oxidation catalyst may be provided in turbine connection 35C. If only, an oxidation catalyst is provided

In Fig. 5, an internal combustion engine 1D is shown that only provides an oxidation catalyst 43 within a turbine connection 35D and does not provide an SCR catalyst. The main configuration of internal combustion engine 1D corresponds essentially to internal combustion engine 1 of Fig. 1 with the exception that no SCR injection system is provided.

In some embodiments, the design of internal combustion 1 (see Fig. 1) may require turbine connection 35 and, accordingly, catalyst section 40 of turbine connection 35 to have a predetermined diameter that fits in the design of the internal combustion engine. As previously described, SCR catalyst 41 should have a large catalytic surface comprising a catalytic reagent for the SCR reaction. At the same time, SCR catalyst 41 should have a flow area that is sufficiently large to prevent a pressure drop over catalyst section 41 that is not desired. Providing a sufficiently large flow area may require increasing the diameter of catalyst 41. Increasing the diameter of catalyst 41 may, however, not be possible due to the predetermined diameter of turbine connection 35. In the following, examples of SCR catalysts and SCR catalyst sections that may have a sufficient catalytic surface and flow area and may be integrated in a turbine connection 35 having a predetermined diameter will be described with reference to Figs. 6 to 15.

Fig. 6 shows a schematic side sectional view of an example of a catalyst section 40 having an SCR catalyst 41 configured to have an increased catalytic surface. Catalyst section 40 shown in Fig. 6 may have a construction similar to the one shown in Fig. 3. The construction of catalyst section 40 will be described in more detail in the following.

As shown in Fig. 6, catalyst section 40 may comprise a housing 112, an inlet 114, an outlet 116, a first chamber 118, a second chamber 120, a catalyst support 124, and SCR catalyst 41. Catalyst section 40 may be configured to fluidly connect first turbine T_{L} and second turbine T_{H} of two-stage turbocharged system 12 ofturbocharged internal combustion engine 1. As shown, for example, in Fig. 1, catalyst section 40 may form part of turbine connection 35.

Housing 112 may, for example, be a section of turbine connection 35, or may be a separate housing disposed in a section of turbine connection 35. Housing 112 may extend in a longitudinal direction z and may, for example, be tubular-shaped or box-shaped. Housing 112 may have a first end and a second end on opposite sides in longitudinal direction z. Housing 112 may be configured to be removable from turbine connection 35 such that catalyst section 40 and/or SCR catalyst 41 may be replaced, if desired.

Inlet 114 may be formed in the first end of housing 112 and may be configured to allow a flow of exhaust in turbine connection 35 to enter housing 112. Outlet 116 may be formed in the second end of housing 112 and may be configured to allow exhaust that has entered housing 112 to exit housing 112 and re-enter turbine connection 35. Inlet 114 and 116 may, for example, extend over the end faces of housing 112 such that housing 112 may be fully open at the first end and the second end. Alternatively, inlet 114 and outlet 116 may be openings formed in parts of the end faces of housing 112.

First chamber 118 and second chamber 120 may at least partially be defined by housing 112. First chamber 118 may be fluidly connected to inlet 114, and second chamber 120 may be fluidly connected to outlet 116. First chamber 118 and second chamber 120 may be fluidly connected by a flow passage 122 formed in housing 112. Flow passage 122 may, for example, be defined by an inner wall section of catalyst section 40. Alternatively, flow passage 122 may also be formed in a partition wall (not shown) between first chamber 118 and second chamber 120.

Catalyst support 124 may be configured to support catalyst 41 such that catalyst 41 may be disposed in flow passage 122. As shown in Fig. 6, catalyst support 124 may, for example, be a wall section of housing 112 configured to match the outer diameter of catalyst 41. Alternatively, catalyst support 124 may be any other appropriate support for supporting catalyst 41, for example, a protrusion, a flange, a groove, a frame, etc. formed on the inside of housing 112.

SCR catalyst 41 may comprise a first end face 104, a second end face 106 formed on an opposite side of first end face 104, and a plurality of channels 108, each of the plurality of channels 108 extending from first end face 104 to second end face 106 and opening to first end face 104 and second end face 106. Second end face 106 may be parallel to first end face 104. SCR catalyst 41 may include a substrate 102 and SCR material or an SCR reagent. Substrate 102 may be made of metal or ceramic and may, for example, include a wire mesh or honeycomb structure. The plurality of channels 108 may be formed in substrate 102 and may be separated by walls having a uniform thickness. For example, each of the honeycombs forming the plurality of channels 108 may have a flow area defined by the walls of substrate 102. The walls of substrate 102 may be coated or impregnated with the SCR material. SCR catalyst 41 may have any appropriate outer shape that may be adapted to be supported by catalyst support 124 in flow passage 122 such that the flow of exhaust entering housing 112 through inlet 114 may enter the plurality of channels 108 at first end face 104, pass through the plurality of channels 108, and exit SCR catalyst 41 at second end face 106 to flow toward outlet 116 of housing 112. In the example shown in Fig. 6, catalyst 41 may be arranged such that first end face 104 faces inlet 114, and second end face 106 faces outlet 116. As such, catalyst 41 may extend in the longitudinal direction z with a constant cross-section, and first and second end faces 104 and 106 may be perpendicular to longitudinal direction z.

To increase the length of each of the plurality of channels 108 and thereby increase the catalytic surface of each of the plurality of channels 108, each of the plurality of channels 108 may be arranged in catalyst 41 such that it extends along a longitudinal axis C that extends from first end face 104 at an angle α. Angle α may, for example, be in the range of around 40° to around 70°. Each of the plurality of channels 108 may have a constant cross-section. With the arrangement of each of the plurality of channels 108 extending at angle α from first end face 104, the catalytic surface provided by each of the plurality of channels 108 may be increased compared to a conventional arrangement in which each of the plurality of channels 108 extends perpendicular to first end face 104 in the direction of the exhaust passing through catalyst section 40.

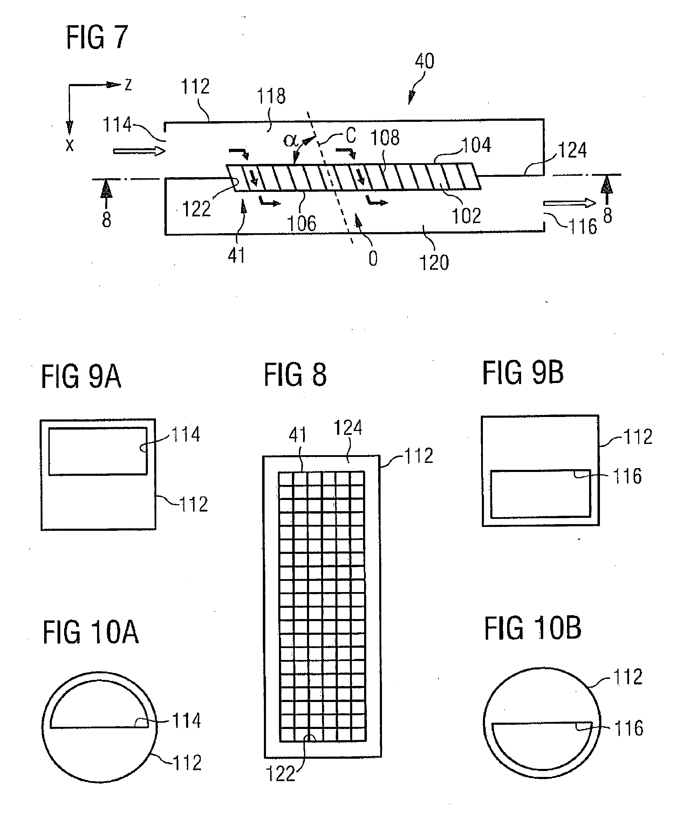

In the embodiment described with respect to Fig. 6, SCR catalyst 41 has been provided in catalyst section 40 with first end face 104 substantially facing the flow of exhaust entering through inlet 114. The flow area of catalyst 41 may be determined by the flow area of each of the plurality of channels 108. To allow installing a catalyst section 40 having an increased flow area in turbine connection 35, an exemplary arrangement such as the one shown in Fig. 7 may be used.

Fig. 7 shows a schematic side sectional view of another example of an SCR catalyst section 40.

In the example shown in Fig. 7, first chamber 118 and second chamber 120 may be arranged such that they overlap in a transverse direction x perpendicular to longitudinal direction z in an overlap region O. In the example shown in Fig. 7, first chamber 118 and second chamber 120 may overlap in the height direction of catalyst section 40, with first chamber 118 being disposed substantially above second chamber 120.

First chamber 118 and second chamber 120 may be separated by a partition wall extending in the longitudinal direction z. The partition wall, for example, may be catalyst support 124. Alternatively, catalyst 41 may be supported by a separate catalyst support such as a fitting portion, a frame, a bracket, etc. attached to or formed in housing 112.

Flow passage 122 may be formed in the partition wall between first chamber 118 and second chamber 120 in overlap region O. Flow passage 122 may be configured to receive catalyst 41 such that exhaust may pass from first chamber 118 to second chamber 120 via catalyst 41.

As shown in Fig. 8, flow passage 122 may have an elongate shape in a cross-section perpendicular to transverse direction x and extend in longitudinal direction z of housing 112. The cross-section of flow passage 122 may, for example, be rectangular. Catalyst support section 124 may, for example, be the portion of the partition wall surrounding flow passage 122.

SCR catalyst 41 disposed in flow passage 122 may be configured as described above with respect to the example shown in Fig. 6, i.e., catalyst 41 may have the plurality of channels 108 extending along longitudinal axis C from first end face 104 at angle α, which angle may be between around 40° and around 70°. In the example shown in Fig. 7, catalyst 41 may be disposed such that first end face 104 is perpendicular to transverse direction x, i.e., first end face 104 may extend substantially along longitudinal direction z.

Inlet 114 and outlet 116 may be offset from each other when viewed from one of the ends of housing 112. Inlet 114 and inlet 116 may be formed such that first chamber 118 may only be open to the outside on the side of inlet 114, and second chamber 120 may only be open to the outside on the side of outlet 116. Accordingly, exhaust may only pass SCR catalyst section 40 by passing through flow passage 122.

Fig. 9A shows an example of a plan view of an inlet-side end of a box-shaped housing 112, and Fig. 9B shows a plan view of an outlet-side end of the housing 112 shown in Fig. 9A. In this example, inlet 114 and outlet 116 may have a rectangular shape and may be offset from each other in the height direction of housing 112.

Fig. 10A and Fig. 10B show plan views of the ends of a tubular-shaped housing 112 according to another example. In housing 112 shown in Fig. 10A and Fig. 10B, inlet 114 and outlet 116 may have a semi-circular cross-section and may be offset from each other in the height direction.

It should be appreciated that housing 112 and corresponding inlets 114 and 116 may have any appropriate shape that may allow installation in turbine connection 35 such that exhaust may enter housing 112 through inlet 114, flow through catalyst 41 disposed in flow passage 122, and exit housing 112 through outlet 116.

With the arrangement shown, for example, in Fig. 7, first end face 104 and second end face 106 of catalyst 41 may be significantly larger than when catalyst 41 is installed such that it faces inlet 114 and outlet 116 as shown, for example, in Fig. 6. Accordingly, the total flow area of catalyst 41 may be significantly larger while providing the same or even a larger total catalytic surface. It is obvious from, for example, Fig. 7, that such an arrangement may result in an outer diameter of catalyst section 40 that may allow installation in a turbine connection that may only have a limited diameter due to space constrains.

With the plurality of channels 108 extending under angle α from first end face 104 of catalyst 41, the length of each of the plurality of channels 108 may be increased in a catalyst 41 having a given width in transverse direction x, providing a sufficient catalytic surface for the exhaust flowing through each of the plurality of channels 108. Further, the flow of exhaust from first chamber 118 through catalyst 41 and into second chamber 120 may be facilitated by guiding the flow of exhaust entering each of the plurality of channels 108 to flow toward outlet 116.

While in the example shown in Fig. 7 catalyst 41 is arranged such that its end faces are perpendicular to transverse direction x, it should be appreciated that a similar effect may be achieved when catalyst 41 is disposed in flow passage 122 such that it is oriented at an angle of less than 90° with respect to transverse direction x, i.e., such that first end face 104 is tilted toward inlet 114. Accordingly, angle α may be increased correspondingly. It is further contemplated that angle α may be 90 degrees. In other words, a conventional catalyst 41 may be used in catalyst section 40 and still result in an increased total flow area of catalyst 41.

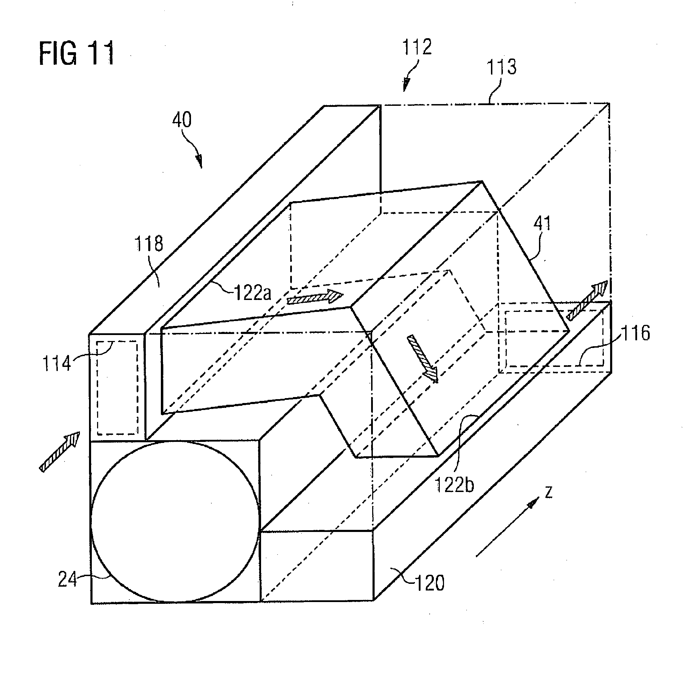

In the example shown in Fig. 7, the plurality of channels 108 formed in catalyst 41 has extended from first end face 104 to second end face 106 substantially in a straight line. To further increase the length of the plurality of channels 108, the plurality of channels 108 may be arranged in catalyst 41 such that each of the plurality of channels 108 is formed by a first segment extending from first end face 104 and a second segment extending from the first segment at an angle and opening to second end face 106. An example of such a catalyst section will be described in the following with reference to Figs. 11 to 15.

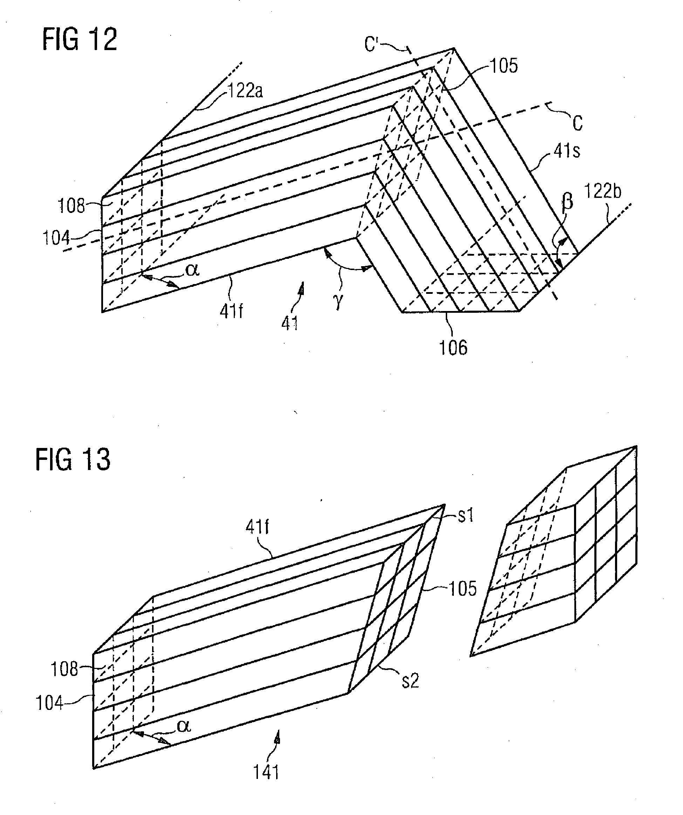

Fig. 11 shows a schematic perspective view of housing 112 of an SCR catalyst section 40 according to another example, and Fig. 12 shows a schematic perspective view of a portion of an SCR catalyst 41 disposed in housing 112. As shown in Fig. 11, housing 112 of catalyst section 40 may be configured such that it extends along longitudinal direction z with an L-shaped cross-section.

Housing 112 may partially define first chamber 118 and second chamber 120. First chamber 118 and second chamber 120 each may extend in longitudinal direction z. First chamber 118 and second chamber 120 may, for example, have a rectangular cross-section. First chamber 118 may be formed in one of the legs of L-shaped housing 112, and second chamber 120 may be formed in the other one of the legs of L-shaped housing 112 such that first chamber 118 and second chamber 120 may extend substantially parallel to each other in longitudinal direction z and overlap with each other. First chamber 118 and second chamber 120 may be connected by an L-shaped connecting portion 113 of housing 112 extending in longitudinal direction z. First chamber 118 may be communicated with the exterior of housing 112 via inlet 114 formed on one side of housing 112 in longitudinal direction z. Second chamber 120 may be communicated with the exterior of housing 112 via outlet 116 formed on the opposite side of housing 112 in longitudinal direction z.

Housing 112 may be configured such that exhaust manifold 24 extending alongside engine 1 (see Figs. 1 and 2) may fit into the space between the legs of housing 112. Housing 112 may be configured to connect first turbine T_{L} and second turbine T_{H}. In particular, housing 112 may be fluidly connected to second turbine T_{H} via inlet 114 and may be fluidly connected to first turbine T_{L} via outlet 116.

First chamber 118 may include a first flow opening 122a formed in a side wall of first chamber 118 adjacent connecting portion 113. Second chamber 120 may include a second flow opening 122b formed in a side wall of second chamber 118 adjacent connecting portion 113. First chamber 118 and second chamber 120 may be fluidly communicated with each other via flow openings 122a, 122b and catalyst 41 disposed within connecting portion 113. Here, connecting portion 113 may form the flow passage in which catalyst 41 is disposed. Catalyst 41 may be supported by inner walls of housing 112 (not shown) which may serve as a catalyst support. Flow openings 122a, 122b may be formed to extend over a substantial portion of the length of first and second chambers 118, 120, respectively, and may be offset with respect to each other in longitudinal direction z. For example, first flow opening 122a may be formed closer to the inlet side, and flow opening 122b may be formed closer to the outlet side.

As previously stated, the length of internal combustion engine 1 and catalyst section 40 may be several meters. SCR catalyst 41 may be formed of, for example, a plurality of catalyst units, each comprising a plurality of channels 108. The catalyst units may be formed of segments having a cross-section of around 10cm by 10cm and a length of, for example, around 40cm. Accordingly, it should be appreciated that catalyst section 40 may comprise a plurality of catalyst units, which may be tightly stacked in housing 112 along longitudinal direction z such that exhaust may only flow from first chamber 118 to second chamber 120 via flow openings 122a, 122b and the plurality of catalyst units stacked in housing 112. The configuration of catalyst 41 will be described in more detail with reference to Fig. 12.

As shown in Fig. 12, a catalyst unit of SCR catalyst 41 may comprise a first catalyst segment 41f and a second catalyst segment 41s s connected at an interface 105 to form an angled L-shape. First end face 104 of catalyst 41 may be formed in first catalyst segment 41f and may be fluidly communicated with first chamber 118 via first flow opening 122a, and second end face 106 of catalyst 41 may be formed in second catalyst segment 41s and may be fluidly communicated with second chamber 120 via second flow opening 122b. The plurality of channels 108 may be formed such that they extend along longitudinal axis C from first end face 104 to interface 105. Further, the plurality of channels 108 may be configured to extend along a longitudinal axis C' from second end face 106 to interface 105. Each of the plurality of channels 108 may be configured to extend form first end face 104 under angle α, which may again be in the range from 40° to 70°, and to extend from second end face 106 at an angle β, which may be the same as angle α, or may be a different angle, for example, 90°. If desired, angle α may also be 90°. As shown in Fig. 12, longitudinal axis C' may form an angle γ with longitudinal axis C. Generally, with the configuration shown, for example, in Fig. 12, angle γ may be greater than 90°, for example, between 100° and 130°.

It should be appreciated that with the exemplary configuration described above, end faces 104 and 106 may be offset from each other in longitudinal direction z such that the shape of catalyst 41 is not strictly an L-shape, but the legs of the L-shape are angled with respect to longitudinal direction z. In particular, each of the plurality of channels 108 extending through catalyst 41 is arranged such that exhaust flowing through the same from first flow opening 122a to second flow opening 122b has a flow component in the z direction, as shown, for example, in Fig. 11.

Fig. 13 shows an example of a method of obtaining segments 41 f, 41s forming catalyst 41. As shown in Fig. 13, for example, segment 41f of catalyst 41 may be made from a block-shaped substrate 141 such as, for example, a known honeycomb structure that extends in a longitudinal direction. The plurality of channels 108 extends along the longitudinal direction. A portion (not shown) of substrate 141 may be cut away at a first end at angle α to form first end face 104. In addition, at the opposite end of substrate 141, another portion of substrate 141 may be cut away to form interface 105. As shown in Fig. 13, the cut to form interface 105 may be made such that interface 105 extends from a first edge s1 parallel to first end face 104 to a second edge s2 that is parallel to first end face 104 but is closer to first end face 104 than first edge s1. By cutting segment 41s of catalyst 41 in a similar manner, the two segments may be connected in the above-described manner at interface 105. Catalyst 41 may be formed by connecting segments 41f, 41s at interface 105 using a plurality of different methods, for example, by pressing segments 41f, 41s to fit into housing 112 such that they are fluid-tightly connected at interface 105, by gluing segments 41f, 41s to each other, by providing appropriately constructed connection pieces, etc.

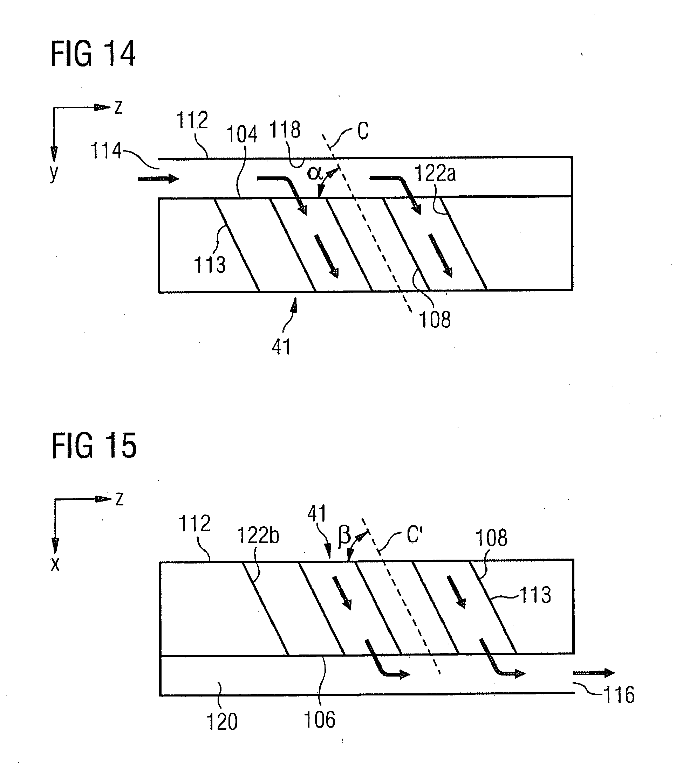

During operation, exhaust from second turbine T_{H} (see Figs. 1 and 2) may enter housing 112 through inlet 114, flow into plurality of channels 108 formed in catalyst 41 at first end face 104, flow through catalyst 41, and exit catalyst 41 at second end face 106, as schematically shown by the flow arrows in Fig. 11. From second end face 106, exhaust may flow through second chamber 120 and enter first turbine T_{L} (see Figs. 1 and 2) via outlet 116. The flow of exhaust through catalyst section 40 will be described in more detail with reference to Figs. 14 and 15.

Fig. 14 shows a schematic top sectional view of housing 112 shown in Fig. 11. As shown in Fig. 14, first chamber 118 is open at inlet 114 and closed on the opposite end of housing 112 in longitudinal direction z. Catalyst 41 is disposed in connecting portion 113 such that first end face 104 is parallel to first flow opening 122a and fluidly connected to first chamber 118. Catalyst 41 is configured such that each of the plurality of channels 108 extends from first end face 104 at angle α along longitudinal axis C, as described above with respect to the example shown in Fig. 7. Accordingly, exhaust may enter first chamber 118 through inlet 114, enter each of the plurality of channels 108 of catalyst 41, and flow toward interface 105 (see Fig. 12).

At interface 105, the plurality of channels 108 may change their direction such that they extend at an angle with respect to longitudinal axis C (see Fig. 12). In particular, each of the plurality of channels 108 may extend from interface 105 along longitudinal axis C' to open in second end face 106, as shown in Fig. 15.

Fig. 15 is a schematic side sectional view of housing 112 shown in Fig. 11. As shown in Fig. 13, longitudinal axis C' may extend at angle β with respect to second end face 106. Second end face 106 may be disposed parallel to second chamber 120. As described above, angle β may be the same as angle α, or may be a different angle. It should be appreciated that the smaller angles α, β, the longer the flow path of exhaust in catalyst 41 will be.

With the exemplary construction shown in Figs. 11-15 it is possible to further increase the length of each of the plurality of channels 108, thereby increasing the amount of catalytic surface available. Further, space constrains of engine 1 may be taken into account in an efficient manner, since catalyst section 41 may be disposed adjacent exhaust manifold 24, as shown in Fig. 11. It should be noted that exhaust manifold 24 may be disposed outside of housing 112, or may alternatively extend through housing 112. In the latter case, housing 112 as a whole may have a rectangular cross-section including the portion shown by dashed lines in Figs. 11.

SCR catalyst section 40, e.g., housing 112 and SCR catalyst 41 may be arranged to extend over the length of combustion engine 1, as in the embodiment described with reference to Fig. 4. Accordingly, as has been previously described, the injection system for injecting the reagent for the SCR may be configured to inject the reagent into exhaust manifold 24.

In some embodiments, the high-pressure stage turbocharger and the low-pressure stage turbocharger may be positioned on the opposing long sides of an engine block. In those embodiments, sufficient access to the various engine components may be provided by specific arrangement or demountabililty of the two-stage turbocharged system.

### Industrial Applicability

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines.

Examples of internal combustion engines for the herein disclosed configuration of a two-stage turbocharged system include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

Medium speed internal combustion engines may be large stand-alone engines that therefore provide reasonable access to the end sides of the engine block.

Although the preferred embodiments of this invention have been described herein, improvements and modifications may be incorporated without departing from the scope of the following claims.

## Claims

1. An SCR catalyst section (40) for fluidly connecting a first turbine (T_{L}) and a second turbine (T_{H}) of a two-stage turbocharged system (12) of a turbocharged internal combustion engine (1), comprising:
a housing (112) extending in a longitudinal direction (z) with an L-shaped cross-section;
an inlet (114) formed in a first end of the housing (112) in the longitudinal direction (z);
an outlet (116) formed in a second end of the housing (112) in the longitudinal direction (z);
a first chamber (118) at least partially defined by the housing (112) and fluidly connected to the inlet (114), the first chamber (118) being formed in one of the end portions of the L-shape;
a second chamber (120) at least partially defined by the housing (112) and fluidly connected to the outlet (116), the second chamber (112) being formed in the other one of the end portions of the L-shape;
a flow passage (122; 113) fluidly connecting the first chamber (118) and the second chamber (120);
a catalyst support (124); and
an SCR catalyst (41) supported by the catalyst support (124) in the flow passage (122; 113), wherein the SCR catalyst (41) comprises:
a first end face (104);
a second end face (106); and
a plurality of channels (108), each of the plurality of channels (108) extending from the first end face (104) to the second end face (106) and opening to the first end face (104) and the second end face (106),
wherein each of the plurality of channels (108) extends from the first end face (104) along a first longitudinal axis (C) at a first angle (α) of around 40° to 70°.

2. The SCR catalyst section according to claim 1, including:
a first catalyst segment (41f) extending from the first end face (104);
a second catalyst segment (41 s) extending from the second end face (106); and
an interface (105) for connecting the first catalyst segment (41f) and the second catalyst segment (41s),
wherein the plurality of channels (108) is formed in the first catalyst segment (41f) to extend from the first end face (104) to the interface (105) along the first longitudinal axis (C), and formed in the second catalyst segment (41s) to extend from the second end face (106) to the interface (105) along a second longitudinal axis (C'), wherein the interface (105) is configured to connect the first catalyst segment (41f) to the second catalyst segment (41s) such that the plurality of channels (108) formed in the first catalyst segment (41f) and the second catalyst segment (41s) are fluidly connected and the second longitudinal axis (C') extends at a second angle (γ) with respect to the first longitudinal axis (C).

3. The SCR catalyst section according to claim 2, wherein the second angle (γ) is in the range of around 100° to around 130°.

4. The SCR catalyst section according to claim 2 or 3,
wherein the first catalyst segment (41f) and the second catalyst segment (41 s), respectively, are formed from a ceramic honeycomb structure having a diameter of around 10cm by 10cm and a length of around 40 cm and are configured to be fluidly connected by press-fitting or gluing.

5. The SCR catalyst section according to one of claims 1 to 4, wherein the catalyst support (124) is configured to support the SCR catalyst (41) such that the first end face (104) faces the first chamber (118) and the second end face (106) faces the second chamber (120).

6. The SCR catalyst section according to one of claim 1 to 5, wherein the first chamber (118) and the second chamber (120) at least partially overlap in a transverse direction (x) perpendicular to the longitudinal direction (z) in an overlap region (O), and the flow passage (122; 113) is formed in the overlap region (O).

7. The SCR catalyst section according any one of claims 1 to 6, wherein the inlet (114) and the outlet (116) are offset from each other when viewed from the first end or the second end of the housing (112).

8. A turbocharged internal combustion engine (1), comprising:
an engine block (10) with a first end side (18L) opposing a second end side (18H); and
a two-stage turbocharged system (12) comprising
a low-pressure stage turbocharger (26) mounted at the first end side (18L) of the engine block and comprising a first turbine (T_{L}) and a first compressor (C_{L}) configured for pre-compressing charge air during operation of the turbocharged internal combustion engine (1),
a high-pressure stage turbocharger (28) mounted at the second end side (18H) of the engine block (10) and comprising a second turbine (T_{H}) and a second compressor (C_{H}) configured for compressing the pre-compressed charge air during operation of the turbocharged internal combustion engine (1),
a compressor connection (34) fluidly connecting the first compressor (C_{L}) and the second compressor (C_{H}); and
a turbine connection (35) fluidly connecting the first turbine (T_{L}) and the second turbine (T_{H}),
wherein the turbine connection (35) includes the SCR catalyst section (40) according to any one of claims 1 to 7.

9. The turbocharged internal combustion engine (1) of claim 8, wherein the turbine connection (35) and the compressor connection (34) extend substantially from the first end side (18L) to the second end side (18H) of the engine block (10).

10. The turbocharged internal combustion engine (1) of claim 8 or 9, wherein the SCR catalyst section (40) has a length of at least 2 m, preferably larger than 2 m, e.g., 3 m.

11. The turbocharged internal combustion engine (1) of any one of claims 8 to 10, further comprising:
a plurality of cylinders (16A-16F);
an exhaust manifold (24) fluidly connecting exhaust outlets of the plurality of cylinders (16A-16F) with an inlet of the second turbine (T_{H}) and extending alongside the turbocharged internal combustion engine (1); and
an injection system (44) configured for injecting a chemical substance for the SCR through an injection inlet (42) into the exhaust manifold (24),
wherein the catalyst section (40) has an outer shape that is configured to be disposed over the exhaust manifold (24) substantially covering the same.

## Patentansprüche

1. SCR-Katalysatorabschnitt (40) zum Fluidverbinden einer ersten Turbine (T_{L}) und einer zweiten Turbine (T_{H}) eines zweistufigen Turboladesystems (12) einer Brennkraftmaschine (1) mit Turboaufladung, mit:
einem Gehäuse (112), das sich mit einem L-förmigen Querschnitt in einer Längsrichtung (z) erstreckt;
einem Einlass (114), der in einem ersten Ende des Gehäuses (112) in der Längsrichtung (z) ausgebildet ist;
einem Auslass (116), der in einem zweiten Ende des Gehäuses (112) in der Längsrichtung (z) ausgebildet ist;
einer ersten Kammer (118), die zumindest teilweise von dem Gehäuse (112) begrenzt wird und mit dem Einlass (114) fluidverbunden ist, wobei die erste Kammer (118) in einem der Endabschnitte der L-Form ausgebildet ist;
einer zweiten Kammer (120), die zumindest teilweise von dem Gehäuse (112) begrenzt wird und mit dem Auslass (116) fluidverbunden ist, wobei die zweite Kammer (112) in dem anderen der Endabschnitte der L-Form ausgebildet ist;
einem Strömungskanal (122; 113), der die erste Kammer (118) und die zweite Kammer (120) fluidverbindet;
einem Katalysatorträger (124); und
einem SCR-Katalysator (41), der von dem Katalysatorträger (124) in dem Strömungskanal (122; 113) getragen wird, wobei der SCR-Katalysator (41) folgendes aufweist:
eine erste Endfläche (104);
eine zweite Endfläche (106); und
mehrere Kanäle (108), von denen sich jeder von der ersten Endfläche (104) zu der zweiten Endfläche (106) erstreckt und in der ersten Endfläche (104) und der zweiten Endfläche (106) geöffnet ist,
wobei sich jeder der mehreren Kanäle (108) unter einem ersten Winkel (α) zwischen etwa 40° und etwa 70° entlang einer ersten Längsachse (C) von der ersten Endfläche (104) erstreckt.

2. SCR-Katalysatorabschnitt nach Anspruch 1, mit:
einem ersten Katalysatorsegment (41f), das sich von der ersten Endfläche (104) erstreckt;
einem zweiten Katalysatorsegment (41s), das sich von der zweiten Endfläche (106) erstreckt; und
einer Grenzfläche (105) zum Verbinden des ersten Katalysatorsegments (41f) und des zweiten Katalysatorsegments (41 s),
wobei die mehreren Kanäle (108) so in dem ersten Katalysatorsegment (41f) ausgebildet sind, dass sie sich entlang der ersten Längsachse (C) von der ersten Endfläche (104) zu der Grenzfläche (105) erstrecken, und so in dem zweiten Katalysatorsegment (41 s) ausgebildet sind, dass sie sich entlang einer zweiten Längsachse (C') von der zweiten Endfläche (106) zu der Grenzfläche (105) erstrecken, wobei die Grenzfläche (105) zum Verbinden des ersten Katalysatorsegments (41f) mit dem zweiten Katalysatorsegment (41s) derart ausgebildet ist, dass die mehreren Kanäle (108), die in dem ersten Katalysatorsegment (41f) und dem zweiten Katalysatorsegment (41s) ausgebildet sind, fluidverbunden sind und sich die zweite Längsachse (C') bezüglich der ersten Längsachse (C) unter einem zweiten Winkel (γ) erstreckt.

3. SCR-Katalysatorabschnitt nach Anspruch 2, bei dem der zweite Winkel (γ) in dem Bereich zwischen etwa 100° und etwa 130° liegt.

4. SCR-Katalysatorabschnitt nach Anspruch 2 oder 3,
bei dem das erste Katalysatorsegment (41f) und das zweite Katalysatorsegment (41s) jeweils aus einer Keramikwabenstruktur mit einem Durchmesser von etwa 10 cm mal 10 cm und einer Länge von etwa 40 cm ausgebildet sind und zur Fluidverbindung durch Presspassung oder Kleben ausgebildet sind.

5. SCR-Katalysatorabschnitt nach einem der Ansprüche 1 bis 4,
bei dem der Katalysatorträger (124) zum Tragen des SCR-Katalysators (41) derart, dass die erste Endfläche (104) der ersten Kammer (118) zugewandt ist, und die zweite Endfläche (106) der zweiten Kammer (120) zugewandt ist, ausgebildet ist.

6. SCR-Katalysatorabschnitt nach einem der Ansprüche 1 bis 5,
bei dem die erste Kammer (118) und die zweite Kammer (120) in einer Querrichtung (x), die senkrecht zu der Längsrichtung (z) ist, zumindest teilweise in einem Überlappbereich (O) überlappen, und der Strömungskanal (122; 113) in dem Überlappbereich (O) ausgebildet ist.

7. SCR-Katalysatorabschnitt nach einem der Ansprüche 1 bis 6, bei dem der Einlass (114) und der Auslass (116) von dem ersten Ende oder dem zweiten Ende des Gehäuses (112) aus gesehen versetzt zueinander angeordnet sind.

8. Brennkraftmaschine (1) mit Turboaufladung, mit:
einem Motorblock (10) mit einer ersten Endfläche (18L), die einer zweiten Endfläche (18H) gegenüberliegt; und
einem zweistufigen Turboladesystem (12) mit
einem Niederdruckturbolader (26), der an der ersten Endfläche (18L) des Motorblocks montiert ist und eine erste Turbine (T_{L}) und einen ersten Kompressor (C_{L}) aufweist, der zum Vorkomprimieren von Ladeluft während eines Betriebs der Brennkraftmaschine (1) mit Turboaufladung ausgebildet ist,
einem Hochdruckturbolader (28), der an der zweiten Endfläche (18H) des Motorblocks (10) montiert ist und eine zweite Turbine (T_{H}) und einen zweiten Kompressor (C_{H}) aufweist, der zum Komprimieren der vorkomprimierten Ladeluft während eines Betriebs der Brennkraftmaschine (1) mit Turboaufladung ausgebildet ist,
einer Kompressorverbindung (34), die den ersten Kompressor (C_{L}) und den zweiten Kompressor (C_{H}) fluidverbindet; und
einer Turbinenverbindung (35), die die erste Turbine (T_{L}) und die zweite Turbine (T_{H}) fluidverbindet,
wobei die Turbinenverbindung (35) den SCR-Katalysatorabschnitt (40) nach einem der Ansprüche 1 bis 7 enthält.

9. Brennkraftmaschine (1) mit Turboaufladung nach Anspruch 8, bei der sich die Turbinenverbindung (35) und die Kompressorverbindung (34) im Wesentlichen von der ersten Endfläche (18L) zu der zweiten Endfläche (18H) des Motorblocks (10) erstrecken.

10. Brennkraftmaschine (1) mit Turboaufladung nach Anspruch 8 oder 9, bei der der SCR-Katalysatorabschnitt (40) eine Länge von mindestens 2 m, bevorzugt mehr als 2 m, z.B. 3 m, aufweist.

11. Brennkraftmaschine (1) mit Turboaufladung nach einem der Ansprüche 8 bis 10, ferner mit:
mehreren Zylindern (16A-16F);
einer Abgassammelleitung (24), die Abgasauslässe der mehreren Zylinder (16A-16F) mit einem Einlass der zweiten Turbine (T_{H}) fluidverbindet und sich entlang der Brennkraftmaschine (1) mit Turboaufladung erstreckt; und
einem Einspritzsystem (44), das zum Einspritzen einer chemischen Substanz für die SCR durch einen Einspritzeinlass (42) in die Abgassammelleitung (24) ausgebildet ist,
wobei der Katalysatorabschnitt (40) eine äußere Form aufweist, die dazu ausgebildet ist, über der Abgassammelleitung (24) angeordnet zu werden und dieselbe im Wesentlichen abzudecken.

## Revendications

1. Section de catalyseur SRC (40) pour établir un raccordement fluidique entre une première turbine (T_{L}) et une seconde turbine (T_{H}) d'un système suralimenté à deux étages (12) d'un moteur à combustion interne suralimenté (1), comprenant :
un boîtier (112) s'étendant dans la direction longitudinale (z) avec une section transversale en forme de L ;
une entrée (114) formée dans une première extrémité du boîtier (112) dans la direction longitudinale (z) ;
une sortie (116) formée dans une seconde extrémité du boîtier (112) dans la direction longitudinale (z) ;
une première chambre (118) au moins en partie définie par le boîtier (112) et en raccordement fluidique avec l'entrée (114), la première chambre (118) étant formée dans l'une des parties d'extrémité de la forme en L ;
une seconde chambre (120) au moins en partie définie par le boîtier (112) et en raccordement fluidique avec la sortie (116), la seconde chambre (112) étant formée dans l'une des parties d'extrémité de la forme en L ;
un passage d'écoulement (122 ; 113) établissant un raccordement fluidique entre la première chambre (118) et la seconde chambre (120) ;
un support de catalyseur (124) ; et
un catalyseur SCR (41) supporté par le support de catalyseur (124) dans le passage d'écoulement (122 ; 113), dans laquelle le catalyseur SCR (41) comprend :
une première face d'extrémité (104) ;
une seconde face d'extrémité (106) ; et
une pluralité de canaux (108), chacun de la pluralité de canaux (108) s'étendant de la première face d'extrémité (104) à la seconde face d'extrémité (106) et débouchant sur la première face d'extrémité (104) et la seconde face d'extrémité (106),
dans laquelle chacun de la pluralité de canaux (108) s'étend de la première face d'extrémité (104) le long d'un premier axe longitudinal (C) sous un premier angle (α) d'environ 40 à 70°.

2. Section de catalyseur SCR selon la revendication 1, comprenant :
un premier segment de catalyseur (41f) s'étendant depuis la première face d'extrémité (104) ;
un second segment de catalyseur (41s) s'étendant depuis la seconde face d'extrémité (106) ; et
une interface (105) pour raccorder le premier segment de catalyseur (41f) et le second segment de catalyseur (41s),
dans laquelle la pluralité de canaux (108) sont formés dans le premier segment de catalyseur (41f) pour s'étendre de la première face d'extrémité (104) à l'interface (105) le long du premier axe longitudinal (C) et formés dans le second segment de catalyseur (41s) pour s'étendre de la seconde face d'extrémité (106) à l'interface (105) le long d'un second axe longitudinal (C'), dans laquelle l'interface (105) est configurée pour raccorder le premier segment de catalyseur (41f) au second segment de catalyseur (41s) de sorte que la pluralité de canaux (108) formés dans le premier segment de catalyseur (41f) et dans le second segment de catalyseur (41s) soient en raccordement fluidique et que le second axe longitudinal (C') s'étende suivant un second angle (γ) par rapport au premier axe longitudinal (C).

3. Section de catalyseur SCR selon la revendication 2, dans laquelle le second angle (γ) se situe dans une plage d'environ 100° à environ 130°.

4. Section de catalyseur SCR selon la revendication 2 ou la revendication 3, dans laquelle le premier segment de catalyseur (41f) et le second segment de catalyseur (41 s), respectivement, sont formés d'une structure céramique en nid d'abeilles ayant un diamètre d'environ 10 cm par 10 cm et une longueur d'environ 40 cm et sont configurés pour être en raccordement fluidique par ajustage serré ou collage.

5. Section de catalyseur SCR selon l'une quelconque des revendications 1 à 4, dans laquelle le support de catalyseur (124) est configuré pour supporter le catalyseur SCR (41) de sorte que la première face d'extrémité (104) soit en regard de la première chambre (118) et que la seconde face d'extrémité (106) soit en regard de la seconde chambre (120).

6. Section de catalyseur SCR selon l'une quelconque des revendications 1 à 5, dans laquelle la première chambre (118) et la seconde chambre (120) se chevauchent au moins en partie dans la direction transversale (x) perpendiculaire à la direction longitudinale (z) dans une région de chevauchement (O), et le passage d'écoulement (112 ; 113) est formé dans la région de chevauchement (O).

7. Section de catalyseur SCR selon l'une quelconque des revendications 1 à 6, dans laquelle l'entrée (114) et la sortie (116) sont décalées l'une de l'autre lorsqu'on les observe depuis la première extrémité ou la seconde extrémité du boîtier (112).

8. Moteur à combustion interne suralimenté (1), comprenant :
un bloc moteur (10) avec un premier côté d'extrémité (18L) opposé à un second côté d'extrémité (18H) ; et
un système suralimenté à deux étages (12) comprenant :
un turbocompresseur à étage basse pression (26) monté sur le premier côté d'extrémité (18L) du bloc moteur et comprenant une première turbine (T_{L}) et un premier compresseur (C_{L}) configuré pour pré-comprimer l'air d'admission au cours du fonctionnement du moteur à combustion interne suralimenté (1),
un turbocompresseur à étage haute pression (28) monté sur le second côté d'extrémité (18H) du bloc moteur (10) et comprenant une seconde turbine (T_{H}) et un second compresseur (C_{H}) configuré pour comprimer l'air d'admission pré-comprimé au cours du fonctionnement du moteur à combustion interne suralimenté (1),
un raccordement de compresseur (34) mettant en raccordement fluidique le premier compresseur (C_{L}) et le second compresseur (C_{H}) ; et
un raccordement de turbine (35) mettant en raccordement fluidique la première turbine (T_{L}) et la seconde turbine (T_{H}),
dans lequel le raccordement de turbine (35) comprend la section de catalyseur SCR (40) selon l'une quelconque des revendications 1 à 7.

9. Moteur à combustion interne suralimenté (1) selon la revendication 8, dans lequel le raccordement de turbine (35) et le raccordement de compresseur (34) s'étendent sensiblement du premier côté d'extrémité (18L) au second côté d'extrémité (18H) du bloc moteur (10).

10. Moteur à combustion interne suralimenté (1) selon la revendication 8 ou la revendication 9, dans lequel la section de catalyseur SCR (40) a une longueur d'au moins 2 m, de préférence de plus de 2 m, par exemple de 3 m.

11. Moteur à combustion interne suralimenté (1) selon l'une quelconque des revendications 8 à 10, comprenant en outre :
une pluralité de cylindres (16A à 16F) ;
un collecteur d'échappement (24) mettant en raccordement fluidique des sorties d'échappement de la pluralité de cylindres (16A à 16F) avec une entrée de la seconde turbine (T_{H}) et s'étendant le long du moteur à combustion interne suralimenté (1) ; et
un système d'injection (44) configuré pour injecter une substance chimique pour le SCR à travers une entrée d'injection (42) dans le collecteur d'échappement (24),
dans lequel la section de catalyseur (40) a une forme externe qui est configurée pour être disposée sur le collecteur d'échappement (24) en recouvrant sensiblement celui-ci.
